# EUROPEAN PATENT SPECIFICATION

(11) **EP 1 765 644 B1**
(45) Date of publication and mention of the grant of the patent: **21.05.2008**
(21) Application number: 05752730.1
(22) Date of filing: 15.06.2005
(51) Int. Cl.: B60R 21/16

(54) **AN AIR-BAG**
AIRBAG
COUSSIN GONFLABLE

(30) Priority: 05.07.2004 GB 0415073
(43) Date of publication of application: 28.03.2007
(73) Proprietor: AUTOLIV DEVELOPMENT AB, 447 83 Vargarda (SE)
(72) Inventor: UNTERSINGER, Pierre, F-56400 Pluneret (FR)
(74) Representative: Parry, Simon James
(86) International application number: PCT/SE2005/000906
(87) International publication number: WO 2006/004485

(56) References cited:
- WO-A1-00/50270
- WO-A1-01/45978
- WO-A1-01/51317
- WO-A1-20/04011308
- US-A- 5 868 422

## Description

### Description of Invention

**THE PRESENT INVENTION** relates to arrangement with an an air-bag formed from a substantially rigid material with the features of the preamble of claim 1 which are known from WO-00/50270A1.

It has been proposed to form air-bags of substantially rigid material such as, for example, a blow-moulded plastics material. In particular, it has been proposed to utilise such a blow-moulded plastics material air-bag for use as a pelvic restraint cushion. Also it has been proposed to use air-bags of metal.

A pelvic restraint cushion is an inflatable cushion which is mounted within the squab of a vehicle seat, towards the forwardmost edge of the seat. The cushion is provided to be inflated in the event that an accident should occur, so that the front part of the squab of the seat rises beneath the thighs of the seat occupant, thus providing a restraint which prevents forward movement of the pelvis of the seat occupant. This is desirable to prevent "submarining" which can occur in certain circumstances, and which results in the lower part of the torso of the seat occupant sliding under the lap part of a conventional lap-and-diagonal seat belt arrangement.

It is preferred to provide a pelvic restraint cushion formed of a substantially rigid material so that pelvic restraint cushion can form part of the seat structure underlying the upholstering of the squab. The cushion can be manufactured in an economic manner and will provide a desirable restraining effect on inflation.

Air-bags made of rigid materials may also find other applications, such as floor mounted air-bags to raise the feet of a vehicle occupant in an impact situation.

The present invention seeks to provide an improved air-bag arrangement.

According to the present invention, there is provided an arrangement with an air-bag formed of substantially rigid material, the air-bag being formed with an integral vent as defined with all features of claim 1. Further details are outlined in the dependent claims.

Preferably, the air-bag is blow-moulded from a plastics material, or may be formed from metal.

Advantageously, the air-bag is a pelvic restraint cushion.

Advantageously, the hole is in the form of a radial extension of a substantially circular aperture, the aperture with the extension being dimensioned to receive a cylindrical gas generator with a protruding stud.

Conveniently, a gas generator and a mounting plate is provided, the mounting plate having a slit to receive a stud provided on the gas generator, and the mounting plate having a portion to engage one end of the gas generator.

Preferably, the mounting plate has an arcuate region configured to overly a cylindrical section of the air-bag which receives the gas generator, the arcuate region having a depending strap at one end to define an aperture, said aperture being dimensioned to receive a terminal part of the gas generator, the arcuate region having an axially extending slot provided at the other end, the slot being dimensioned to receive the stud provided on the gas generator.

In order that the invention may be more readily understood, and so that further features thereof may be appreciated, embodiments of the invention will now be described, by way of example, with reference to the accompanying drawings in which:
FIGURE 1 is a perspective view of the lower part of a substantially rigid air-bag in the form of a pelvic restraint cushion,
FIGURE 2 is a perspective view of mounting plate used to mount the air-bag of Figure 1 in position,
FIGURE 3 is a perspective view of a gas generator or inflator for use with the air-bag,
FIGURE 4 is an enlarged view of part of the air-bag with the gas generator in place,
FIGURE 5 is a further enlarged view of part of the air-bag with the gas generator in place,
FIGURE 6 is a perspective view showing the air-bag and mounting plate when assembled,
FIGURE 7 is a part cut-away view of an alternative embodiment of the invention,
FIGURE 8 is a part cut-away view of a further alternative embodiment of the invention, and
FIGURE 9 is a view of the embodiment of Figure 8 when a burst disc has burst.

In prior proposed air-bags formed from rigid material, a separate vent has been provided to ensure that the bag operates in a desired manner, when inflated, to prevent the air-bag being too "hard", which might cause undesirable injuries. In the described embodiments of the invention an integral vent is provided.

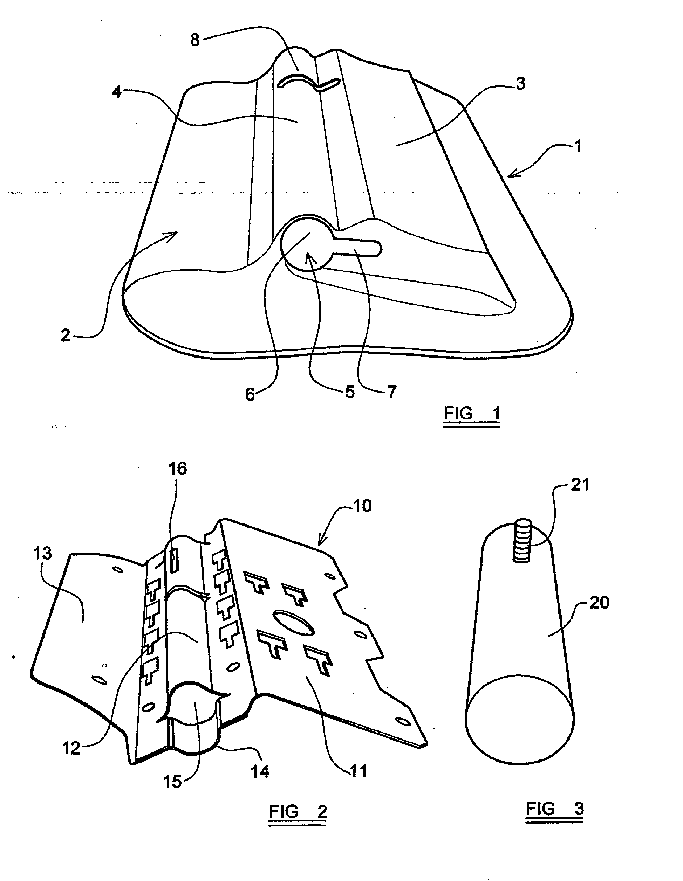

Referring initially to Figure 1 of the accompanying drawings, a air-bag 1 is provided for use as a pelvic restraint cushion. The air-bag 1 is formed of a substantially rigid material. The air-bag may, for example, be blow-moulded from a plastics material, the air-bag having a predetermined initial internal volume. As will become apparent, a gas generator is inserted into the air-bag 1 in order to generate gas to cause the air-bag to become inflated.

The air-bag 1, as shown in Figure 1, is of generally rectangular form, and has a contoured under-surface 2. The under-surface 2 defines a substantially wedge-shaped projection 3, and also, adjacent one side of the wedge-shaped projection 3, a generally cylindrical projection 4. The cylindrical projection 4 is hollow and is provided primarily to receive a cylindrical gas generator as will be described.

One end of the cylindrical projection 4 is provided with an access aperture 5. The access aperture 5 has a substantially circular region 6 provided in alignment with the longitudinal axis of the cylindrical projection 4, and a radially outwardly directed extension 7 in the form of a slot.

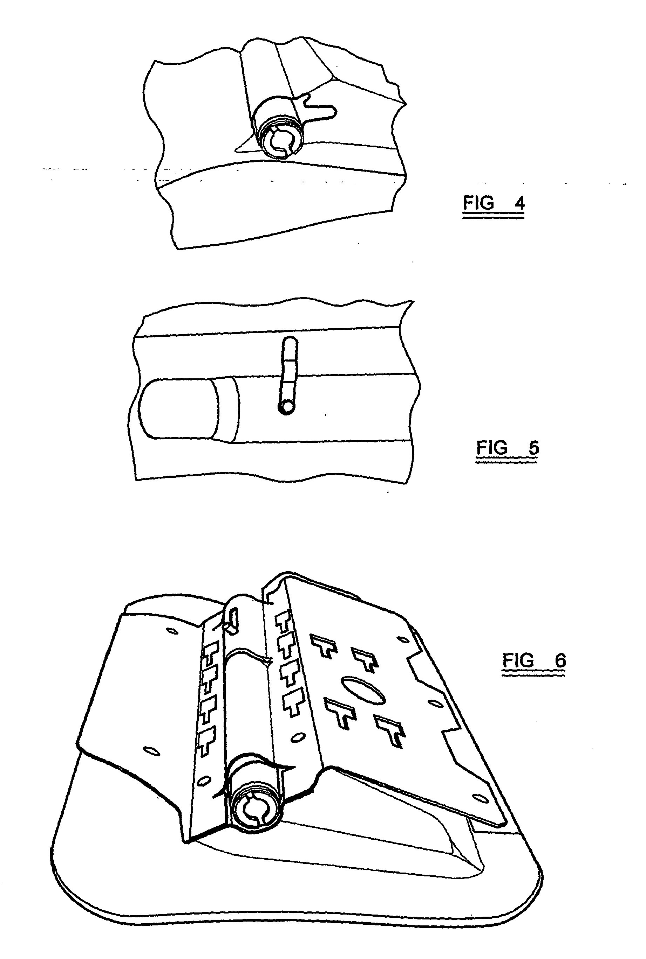

At the far end of the cylindrical projection 4 from the access aperture 5, a slit 8 is provided. The slit 8, seen most clearly in Figure 5, extends transversely to the longitudinal axis of the cylindrical projection 4, and extends part way around the circumference of the cylindrical projection 4 and part way up one wall of the wedge-shaped projection 3.

A mounting plate 10 (shown in Figure 2) is provided to facilitate mounting the air-bag 1 in position, for example in part of the squab of a vehicle seat. The mounting plate may be formed of metal or of plastic. The mounting plate 10 comprises a first substantially planar portion 11 configured, as will become clearer from the following description, to overly the under-surface of the wedge-shaped projection 3 discussed above. The planar portion 11 merges into an arcuate region 12 positioned to overly the cylindrical projection 4. A further terminal planar region 13 is provided to extend away from the arcuate region 12.

One end of the arcuate region 12 is depressed downwardly from the mounting plate to form a depending strap 14 that extends beneath the arcuate region 12, thus defining, at one side edge of the mounting plate, an aperture 15. The aperture 15 is located to be co-aligned with the access aperture 5.

At the other end of the arcuate region 12, that is to say the end remote from the aperture 15, an axially extending slot 16 is provided in the uppermost part of the arcuate region 12.

A generally cylindrical gas generator 20 is provided as shown in Figure 3, the gas generator having a radially extending stud 21 adjacent one end.

The gas generator 20 may be inserted into the air-bag 1 by aligning the gas generator 20 so that the stud 21 is in alignment with the radial extension 7 of the access aperture 5. The cylindrical gas generator 20 may then be inserted into the air-bag with the end adjacent the stud 21 entering the aperture 5 first and with the stud 21 entering the air-bag through the radial extension 7. The gas generator 20 may be urged into the air-bag 1 through the access aperture 5, as shown in Figure 4.

The gas generator 20 may be inserted into the air-bag 1 until the stud 21 is aligned with the slit 8 provided in the uppermost part of the cylindrical projection 4. The gas generator 20 may then be rotated by about 90°, with the stud 21 passing through the slit 8, until the stud is substantially vertical. The stud, in the vertical position, is shown from above in Figure 5, and projects through the slit 8.

The mounting plate 10 may then be lowered onto the stud 21, with the stud 21 passing through the end of the slot 16 which is furthest from the aperture 15. The metal strap 14 will be lowered past the end of the gas generator 20. The mounting plate 10 may then be moved transversely so that the metal strap 14 is moved to a position where it engages a terminal part of the gas generator as shown in Figure 6. During this movement the stud 21 will effectively move to the end of the slot 16 which is closest to the aperture 15.

The entire air-bag may then be mounted in position on the mounting plate using a single nut on the stud 21. The combination of the nut and the stud 21 will serve to retain one end of the gas generator 20, and the engagement of the strap 14 of the support plate 10 with the other end of the gas generator 20 will retain the other end of the gas generator in position. With both ends of the gas generator being retained in position the entire air-bag is retained in position on the mounting plate 10. The mounting plate 10 may be secured to the framework of a seat squab by bolts or equivalent fastening passing through apertures in the mounting plate.

It is to be appreciated that the air-bag is provided with two integral vents. The first vent is formed by the radial extension 7 of the circular portion 6 of the aperture 5 through which the gas generator 20 is inserted into the air-bag, and the second vent is formed is formed by part of the slit 8 formed in the wall of the wedge shaped projection 3. Both of the integral vents are thus constituted by a pre-formed hole provided in the air-bag.

On inflation of the air-bag 1, should gas pressure within the air-bag 1 rise to high levels, part of the gas will be vented through the vents, thus ensuring that the air-bag will have an appropriate degree of hardness/softness..

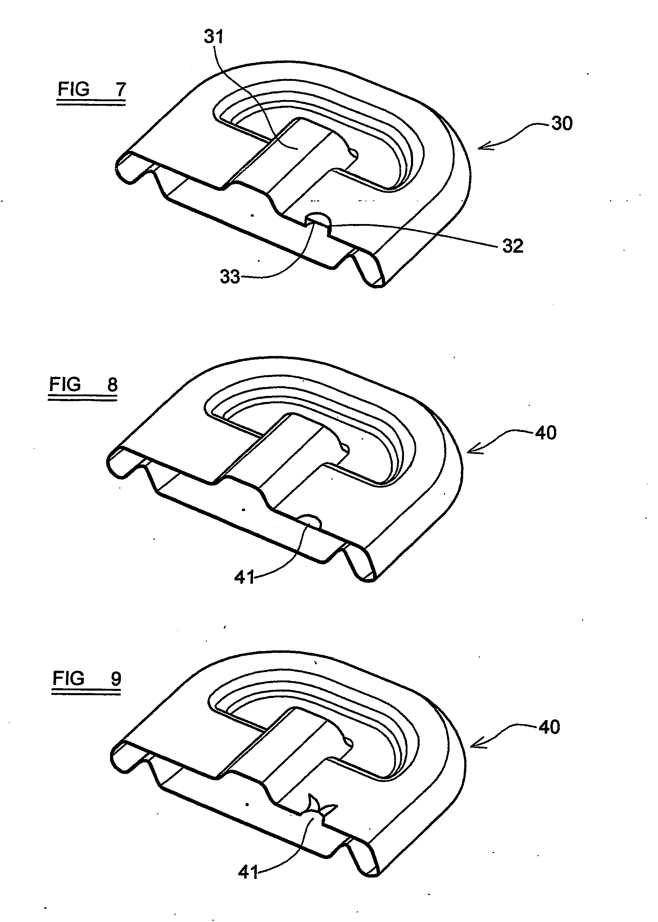

Turning now to Figure 7, an alternate form of pelvic restraint cushion 30 is illustrated which, again, is in the form of an air-bag formed from a substantially rigid material, such as a plastics material. Figure 7 shows part of a pelvic restraint cushion 30, the pelvic restraint cushion 30 defining a generally cylindrical region 31 to receive a gas generator. The air-bag is formed using a blow-moulding technique. As the air-bag is blow-moulded, so a projection 32 is created which extends away from the interior of the air-bag, the uppermost part of the projection being in the form of a thin web or foil 33. The web or foil 33 forms a burst disc which will burst if gas pressure within the bag rises to a predetermined level.

Figure 8 illustrates a further pelvic restraint cushion 40 which is very similar to the pelvic restraint cushion 30 described above with reference to Figure 7. In this embodiment of the invention, however, after the air-bag has been blow-moulded, part of the material of the air-bag, in a specific area 41, is abraded away so that the area 41 forms a very thin foil or burst disc.

As shown in Figure 9, should pressure within the pelvic restraint cushion 40. rise to a predetermined pressure the burst disc 41 will rupture to permit the excess pressure to be relieved.

The invention has been described with reference to embodiments formed of plastic. The invention also relates to air-bags made of metal. In such an embodiment the vent may be stamped in the metal.

When used in this Specification and Claims, the terms "comprises" and "comprising" and variations thereof mean that the specified features, steps or integers are included. The terms are not to be interpreted to exclude the presence of other features, steps or components.

## Claims

1. The combination of an air-bag formed of substantially rigid material and a gas generator, wherein the air-bag is formed with an integral vent provided by a pre-formed hole in the air-bag **characterised in that**, said hole being dimensioned to receive part of the gas generator on insertion of said part of the gas generator into the air-bag.

2. The combination of Claim 1 wherein the gas generator is in the form of a cylinder with a laterally projecting stud (21) adjacent one end and wherein said hole comprises a substantially circular aperture (6) dimensioned to receive said cylinder, with a radial extension (7) of said substantially circular aperture being dimensioned to receive said protruding stud (21) as the gas generator is inserted in the air-bag and providing said integral vent after insertion of the gas generator into the air-bag.

3. The combination of Claim 2 including a mounting plate having a slit to receive said stud on the gas generator, the mounting plate having a portion to engage one end of the gas generator.

4. The combination of Claim 3 where in the mounting plate has an arcuate region configured to overlie a cylindrical section of the air-bag which receives the gas generator, the arcuate region having a depending strap at one end to define an aperture, said aperture being dimensioned to receive a terminal part of the gas generator projecting from the bag, the arcuate region having an axially extending slot provided at its other end, the slot being dimensioned to receive the stud on the gas generator.

5. The combination according to any preceding claim wherein the air-bag is blow-moulded from a plastic material.

6. A combination according to any of claims 1 to 4 wherein the air-bag is formed from metal.

7. A combination according to any preceding claim wherein the air-bag is a pelvic restraint cushion.

## Patentansprüche

1. Die Kombination eines aus im Wesentlichen starrem Material gebildeten Airbags und eines Gasgenerators, wobei der Air-bag mit einem integrierten, durch ein vorgeformtes Loch in dem Airbag gebildeten Luftdurchlass gebildet ist, **dadurch gekennzeichnet**e dass das Loch zum Aufnehmen eines Teils des Gasgenerators beim Einsetzen des Teils des Gasgenerators in den Airbag dimensioniert ist,

2. Die Kombination des Anspruchs 1, wobei der Gasgenerator die Form eines Zylinders aufweist mit einem sich seitlich erstreckenden Bolzen (21) nahe einem Ende, und wobei das Loch eine im wesentlichen kreisrunde Öffnung (6) umfasst, die zum Aufnehmen des Zylinders eingerichtet ist, mit einer radialen Erweiterung (7) der im Wesentlichen, kreisrunden Öffnung, die zum Aufnehmen des vorstehenden Bolzens (21) beim Einführen in den Airbag dimensioniert ist und den integrierten Luftdurchlass nach dem Einsetzen des Gasgenerators in den Airbag bildet.

3. Die Kombination des Anspruchs 2, umfassend eine Befestigungsplatte, die einen Schlitz zum Aufnehmen des Bolzens an dem Gasgenerator aufweist, wobei die Befestigungsplatte einen Teil zum zusammenwirken mit einem Ende des Gasgenerators aufweist.

4. Die Kombination des Anspruchs 3, wobei die Befestigungsplatte einen bogenförmigen Bereich aufweist, der zum Überlagern eines den Gasgenerator aufnehmenden zylindrischen Abschnitts des Airbags eingerichtet; ist, wobei der bogenförmige Bereich einen abhängige Streifen an einem Ende zum Definieren einer Öffnung aufweist, wobei die öffnung zum Aufnehmen eines von dem Bag vorstehenden Endbereichs des Gasgenerators dimensioniert ist, wobei der bogenförmige Bereich einen sich axial erstreckenden, an dem anderen Ende vorgesehenen Schlitz aufweist, wobei der Schlitz zum Aufnehmen des Bolzens an dem Gasgenerator dimensioniert ist,

5. Die Kombination nach einem der vorangehenden Ansprüche, wobei der Airbag aus einem Kunststoffmaterial blasgeformt ist.

6. Die Kombination nach einem der vorangehenden Ansprüche, wobei der Airbag aus einem Metall gefertigt ist.

7. Die Kombination nach einem der vorangehenden Ansprüche, wobei der Airbag ein Beckengurtpolster ist.

## Revendications

1. Combinaison d'un coussin gonflable formé à partir d'un matériau sensiblement rigide et d'un générateur de gaz, dans lequel le coussin gonflable est équipé d'un évent intégré procuré par un orifice préformé dans le coussin gonflable, **caractérisé en ce que** ledit orifice est dimensionné pour recevoir une partie du générateur de gaz lors de l'insertion de ladite partie du générateur de gaz dans le coussin gonflable.

2. Combinaison de la revendication 1 dans laquelle le générateur de gaz se présente sous la forme d'un cylindre avec un goujon se projetant latéralement (21) adjacent à une extrémité et dans laquelle ledit orifice comprend une ouverture sensiblement circulaire (6) dimensionnée pour recevoir ledit cylindre, une extension radiale (7) de ladite ouverture sensiblement circulaire étant dimensionnée pour recevoir ledit goujon saillant (21) à mesure que le générateur de gaz est inséré dans le coussin gonflable et procurant ledit évent intégré après l'insertion du générateur de gaz dans le coussin gonflable.

3. Combinaison de la revendication 2 comprenant une plaque de montage comportant une fente pour recevoir ledit goujon sur le générateur de gaz, la plaque de montage comportant une partie pour se mettre en prise avec une extrémité du générateur de gaz.

4. Combinaison de la revendication 3 dans laquelle la plaque de montage comporte une région arquée configurée pour recouvrir une section cylindrique du coussin gonflable qui reçoit le générateur de gaz, la région arquée comportant une bride dépendante au niveau d'une extrémité pour définir une ouverture, ladite ouverture étant dimensionnée pour recevoir une partie terminale du générateur de gaz se projetant à partir du sac, la région arquée comportant une rainure s'étendant de manière axiale prévue au niveau de son autre extrémité, la rainure étant dimensionnée pour recevoir le goujon sur le générateur de gaz.

5. Combinaison selon l'une quelconque des revendications précédentes dans laquelle le coussin gonflable est moulé par soufflage à partir d'un matériau plastique.

6. Combinaison selon l'une quelconque des revendications 1 à 4 dans laquelle le coussin gonflable est formé à partir de métal.

7. Combinaison selon l'une quelconque des revendications précédentes dans laquelle le coussin gonflable est un coussinet de ceinture sous-abdominale.
